# EUROPEAN PATENT SPECIFICATION

(11) **EP 3 785 113 B1**
(45) Date of publication and mention of the grant of the patent: **03.04.2024**
(21) Application number: 19710880.6
(22) Date of filing: 26.02.2019
(51) Int. Cl.: G06F 9/38, G06F 9/50

(54) **FEEDBACK GUIDED SPLIT WORKGROUP DISPATCH FOR GPUS**
RÜCKGEKOPPLUNGSGEFÜHRTE GETEILTE ARBEITSGRUPPENABSENDUNG FÜR GPUS
RÉPARTITION GUIDÉE PAR RÉTROACTION D'UN GROUPE DE TRAVAIL FRACTIONNÉ POUR GPU

(30) Priority: 27.04.2018 US 201815965231
(43) Date of publication of application: 03.03.2021
(73) Proprietor: Advanced Micro Devices, Inc., Santa Clara, CA 95054 (US)
(72) Inventor: UKIDAVE, Yash Sanjeev, Waltham, Massachusetts 02451 (US); KALAMATIANOS, John, Arlington, Massachusetts 02474 (US); BECKMANN, Bradford Michael, Redmond, Washington 98052 (US)
(74) Representative: Hancox, Jonathan Christopher
(86) International application number: PCT/US2019/019610
(87) International publication number: WO 2019/209405

(56) References cited:
- US-A1- 2011 219 221
- US-A1- 2014 156 975
- US-B2- 8 933 942
- US-B2- 9 317 296

## Description

### BACKGROUND

This invention was made with Government support under the PathForward Project with Lawrence Livermore National Security, Prime Contract No. DE-AC52-07NA27344, Subcontract No. B620717 awarded by the United States Department of Energy. The United States Government has certain rights in this invention.

### Description of the Related Art

A graphics processing unit (GPU) is a complex integrated circuit that performs graphics-processing tasks. For example, a GPU executes graphics-processing tasks required by an end-user application, such as a video-game application. GPUs are also increasingly being used to perform other tasks which are unrelated to graphics. In some implementations, the GPU is a discrete device or is included in the same device as another processor, such as a central processing unit (CPU).

In many applications, such as graphics processing in a GPU, a sequence of work-items, which can also be referred to as threads, are processed so as to output a final result. In one implementation, each processing element executes a respective instantiation of a particular work-item to process incoming data. A work-item is one of a collection of parallel executions of a kernel invoked on a compute unit. A work-item is distinguished from other executions within the collection by a global ID and a local ID. As used herein, the term "compute unit" is defined as a collection of processing elements (e.g., single-instruction, multiple-data (SIMD) units) that perform synchronous execution of a plurality of work-items. The number of processing elements per compute unit can vary from implementation to implementation. A subset of work-items in a workgroup that execute simultaneously together on a compute unit can be referred to as a wavefront, warp, or vector. The width of a wavefront is a characteristic of the hardware of the compute unit. As used herein, a collection of wavefronts are referred to as a "workgroup". GPUs dispatch work to the underlying compute resources at the granularity of a workgroup. Typically, a workgroup is dispatched when all of the resources for supporting the full workgroup are available on a single compute unit. These resources include at least vector and scalar registers, wavefront slots, and local data share (LDS) space. Current GPU hardware does not allow dispatching a workgroup to a given compute unit if the given compute unit does not have the resources required by all of the wavefronts in the workgroup. This leads to an increase in workgroup stalls due to resource unavailability. This also has a direct impact on the forward progress made by the application and reduces the wavefront level parallelism (WLP) and thread level parallelism (TLP) of the GPU.

US 2014/0156975 (Sridharan et al.) discloses a redundant threading method including replicating input data for first and second lanes of a processor, the first and second lanes being located in a same cluster of the processor and the first and second lanes each generating a respective value associated with an instruction to be executed in the respective lane, and responsive to a determination that the generated values do not match, providing an indication that the generated values do not match. US 9,317,296 (Rogers et al.) discloses a method including overriding an execution mask of SIMD hardware to enable at least one of a plurality of lanes of the SIMD hardware. Overriding the execution mask is responsive to a data parallel computation and a diverged control flow of a workgroup.

### SUMMARY

The invention relates to a processor in accordance with claim 1, a method in accordance with claim 6 and a system in accordance with claim 11. Further optional features of the invention are defined in the dependent claims.

### BRIEF DESCRIPTION OF THE DRAWINGS

The advantages of the methods and mechanisms described herein may be better understood by referring to the following description in conjunction with the accompanying drawings, in which:
FIG. 1 is a block diagram of one implementation of a computing system.
FIG. 2 is a block diagram of another implementation of a computing system.
FIG. 3 is a block diagram of one implementation of a GPU.
FIG. 4 is a block diagram of one implementation of a split dispatch of a workgroup in a GPU.
FIG. 5 is a block diagram of one implementation of workgroup dispatch control logic.
FIG. 6 is a block diagram of one implementation of a feedback-based compute unit selection mechanism.
FIG. 7 is a block diagram of one implementation of a GPU with a split workgroup scoreboard connected to compute units.
FIG. 8 is a block diagram of one implementation of scoreboard tracking of a split dispatch workgroup.
FIG. 9 is a generalized flow diagram illustrating one implementation of a method for performing a split workgroup dispatch.
FIG. 10 is a generalized flow diagram illustrating one implementation of a method for using a scoreboard to track progress of the wavefronts of a split workgroup.
FIG. 11 is a generalized flow diagram illustrating one implementation of a method for selecting compute units for allocating wavefronts of a split workgroup.
FIG. 12 is a generalized flow diagram illustrating one implementation of a method for dispatching wavefronts of a workgroup so as to minimize resource contention among compute units.

### DETAILED DESCRIPTION OF IMPLEMENTATIONS

In the following description, numerous specific details are set forth to provide a thorough understanding of the methods and mechanisms presented herein. However, one having ordinary skill in the art should recognize that the various implementations may be practiced without these specific details. In some instances, well-known structures, components, signals, computer program instructions, and techniques have not been shown in detail to avoid obscuring the approaches described herein. It will be appreciated that for simplicity and clarity of illustration, elements shown in the figures have not necessarily been drawn to scale. For example, the dimensions of some of the elements may be exaggerated relative to other elements.

Various systems, apparatuses, methods, and computer-readable mediums for performing a "split" (or alternatively "divided") workgroup dispatch to multiple compute units are disclosed herein. A processor (e.g., graphics processing unit (GPU)) includes at least a plurality of compute units, control logic, and a dispatch unit. The dispatch unit dispatches workgroups to the compute units of the GPU. Typically, a workgroup is dispatched when all of the resources for supporting the full workgroup are available on a single compute unit. These resources include at least vector and scalar registers, wavefront slots, and local data share (LDS) space. However, the hardware executes threads at the granularity of a wavefront, where a wavefront is a subset of the threads in a workgroup. Since the unit of hardware execution is smaller than the unit of dispatch, it is common for the hardware to deny a workgroup dispatch request while it would still be possible to support a subset of the wavefronts forming that workgroup. This discrepancy between dispatch and execution granularity limits the achievable TLP and WLP on the processor for a particular application.

In one implementation, the control logic monitors resource contention among the plurality of compute units and calculates a load-rating for each compute unit based on the resource contention. The dispatch unit receives workgroups for dispatch and determines how to dispatch workgroups to the plurality of compute units based on the calculated load-ratings. If a workgroup is unable to fit in a single compute unit based on the currently available resources of the compute units, the dispatch unit splits the workgroup into its individual wavefronts and dispatches wavefronts of the workgroup to different compute units. In one implementation, the dispatch unit determines how to dispatch the wavefronts to specific ones of the compute units based on the calculated load-ratings.

In one implementation, the control logic is coupled to a scoreboard to track the execution status of the wavefronts of the split workgroup. The control logic allocates a new entry in the scoreboard for a workgroup which has been divided into wavefronts dispatched to multiple compute units. When any wavefront reaches a barrier instruction, the corresponding compute unit sends an indication to the control logic. In response to receiving this indication, the control logic sets the barrier taken flag field in the corresponding scoreboard entry. Then, the compute units send signals when the other wavefronts reach the barrier. The control logic increments a barrier taken count in the corresponding scoreboard entry, and when the barrier taken count reaches the total number of wavefronts for the workgroup, the control logic sends signals to the compute units to allow the wavefronts to proceed. In one implementation, the scoreboard entry includes a compute unit mask to identify which compute units execute the wavefronts of the split workgroup.

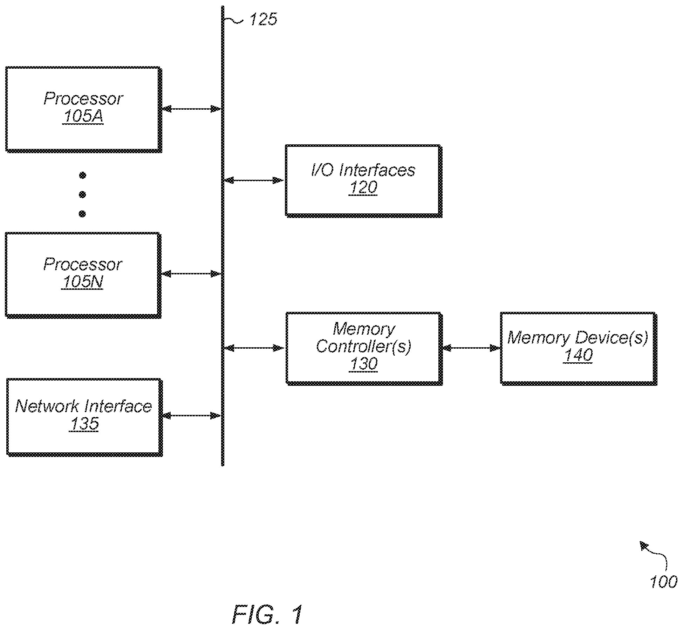

Referring now to FIG. 1, a block diagram of one implementation of a computing system 100 is shown. In one implementation, computing system 100 includes at least processors 105A-N, input/output (I/O) interfaces 120, bus 125, memory controller(s) 130, network interface 135, and memory device(s) 140. In other implementations, computing system 100 includes other components and/or computing system 100 is arranged differently. Processors 105A-N are representative of any number of processors which are included in system 100.

In one implementation, processor 105A is a general purpose processor, such as a central processing unit (CPU). In this implementation, processor 105N is a data parallel processor with a highly parallel architecture. Data parallel processors include graphics processing units (GPUs), digital signal processors (DSPs), field programmable gate arrays (FPGAs), application specific integrated circuits (ASICs), and so forth. In some implementations, processors 105B-N include multiple data parallel processors. Each data parallel processor is able to divide workgroups for dispatch to multiple compute units. Each data parallel processor is also able to dispatch workgroups to multiple compute units so as to minimize resource contention among the compute units. Techniques for implementing these and other features are described in more detail in the remainder of this disclosure.

Memory controller(s) 130 are representative of any number and type of memory controllers accessible by processors 105A-N and I/O devices (not shown) coupled to I/O interfaces 120. Memory controller(s) 130 are coupled to any number and type of memory devices(s) 140. Memory device(s) 140 are representative of any number and type of memory devices. For example, the type of memory in memory device(s) 140 includes Dynamic Random Access Memory (DRAM), Static Random Access Memory (SRAM), NAND Flash memory, NOR flash memory, Ferroelectric Random Access Memory (FeRAM), or others.

I/O interfaces 120 are representative of any number and type of I/O interfaces (e.g., peripheral component interconnect (PCI) bus, PCI-Extended (PCI-X), PCIE (PCI Express) bus, gigabit Ethernet (GBE) bus, universal serial bus (USB)). Various types of peripheral devices (not shown) are coupled to I/O interfaces 120. Such peripheral devices include (but are not limited to) displays, keyboards, mice, printers, scanners, joysticks or other types of game controllers, media recording devices, external storage devices, network interface cards, and so forth. Network interface 135 is used to receive and send network messages across a network.

In various implementations, computing system 100 is a computer, laptop, mobile device, game console, server, streaming device, wearable device, or any of various other types of computing systems or devices. It is noted that the number of components of computing system 100 varies from implementation to implementation. For example, in other implementations, there are more or fewer of each component than the number shown in FIG. 1. It is also noted that in other implementations, computing system 100 includes other components not shown in FIG. 1. Additionally, in other implementations, computing system 100 is structured in other ways than shown in FIG. 1.

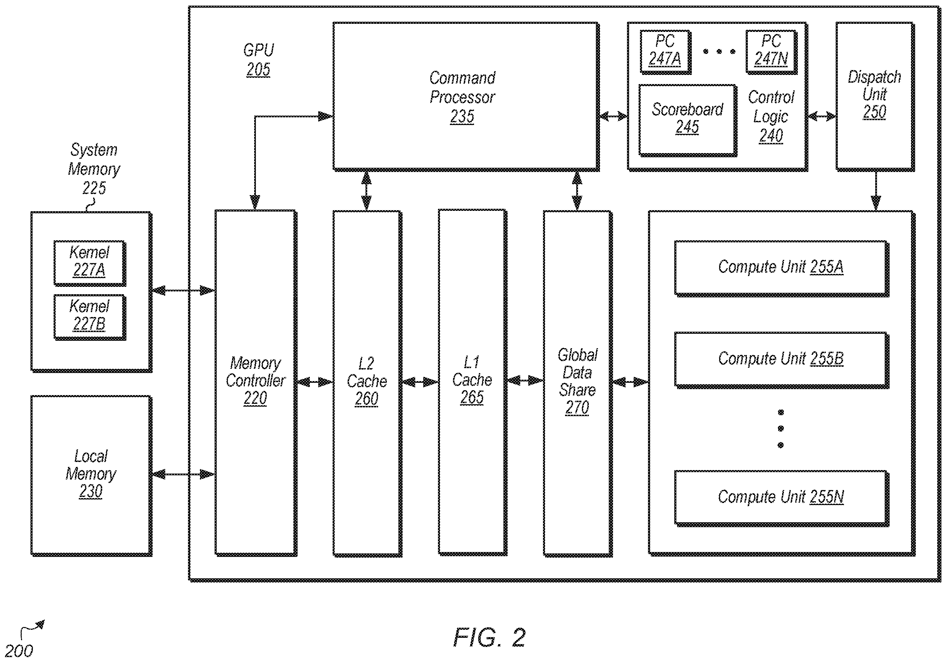

Turning now to FIG. 2, a block diagram of another implementation of a computing system 200 is shown. In one implementation, system 200 includes GPU 205, system memory 225, and local memory 230. System 200 also includes other components which are not shown to avoid obscuring the figure. GPU 205 includes at least command processor 235, control logic 240, dispatch unit 250, compute units 255A-N, memory controller 220, global data share 270, level one (L1) cache 265, and level two (L2) cache 260. In other implementations, GPU 205 includes other components, omits one or more of the illustrated components, has multiple instances of a component even if only one instance is shown in FIG. 2, and/or is organized in other suitable manners. For example, in another implementation, GPU 205 includes multiple dispatch units.

In various implementations, computing system 200 implements any of various types of software applications. Command processor 240 receives commands from a host CPU (not shown) and uses dispatch unit 250 to issue commands to compute units 255A-N. Threads within kernels executing on compute units 255A-N read and write data to global data share 270, L1 cache 265, and L2 cache 260 within GPU 205. Although not shown in FIG. 2, compute units 255A-N also include one or more caches and/or local memories within each compute unit 255AN.

Command processor 240 performs a variety of tasks for GPU 205. For example, command processor 240 schedules compute tasks, data movement operations through direct memory access (DMA), and various post-kernel clean-up activities. Control logic 240 monitors resource contention among the resources of GPU 205 and helps dispatch unit 250 determine how to dispatch wavefronts to compute units 255A-N to minimize resource contention. In one implementation, control logic 240 includes scoreboard 245 and performance counters (PCs) 247A-N for monitoring the resource contention among compute units 255A-N. Performance counters 247A-N are representative of any number of performance counters for monitoring resources such as vector arithmetic logic unit (VALU) execution bandwidth, scalar ALU (SALU) execution bandwidth, local data share (LDS) bandwidth, Load Store Bus bandwidth, Vector Register File (VRF) bandwidth, Scalar Register File (SRF) bandwidth, the cache subsystem capacity and bandwidth including the L1, L2, and L3 caches and TLBs, and other resources.

Control logic 240 uses scoreboard 245 to monitor the wavefronts of split workgroups that are dispatched to multiple compute units 255A-N. For example, scoreboard 245 tracks the different wavefronts of a given split workgroup that are executing on multiple different compute units 255A-N. Scoreboard 245 includes an entry for the given split workgroup, and the entry identifies the number of wavefronts of the given split workgroup, the specific compute units on which the wavefronts are executing, the workgroup ID, and so on. The scoreboard entry also includes a barrier sync enable field to indicate when any wavefront has reached a barrier. When a wavefront reaches a barrier, the compute unit will cause the wavefront to stall. The scoreboard entry includes a barrier taken count to track the number of wavefronts that have reached the barrier. When the barrier taken count reaches the total number of wavefronts of the given workgroup, control logic 240 notifies the relevant compute units that the wavefronts are now allowed to proceed.

In one implementation, system 200 stores two compiled versions of kernel 227 in system memory 225. For example, one compiled version of kernel 227A includes barrier instructions and uses scoreboard 245 as a central mechanism to synchronize wavefronts that are executed on separate compute units 255A-N. A second compiled version of kernel 227B uses global data share 270 instructions or atomic operations to memory to synchronize wavefronts that are executed on separate compute units 255A-N. Both kernel 227A and kernel 227B are available in the application's binary and available at runtime. Command processor 235 and control logic 240 decides at runtime which kernel to use when dispatching the wavefronts of the corresponding workgroup to compute units 255A-N. The decision on which kernel (227A or 227B) to use is made based on one or more of power consumption targets, performance targets, resource contention among compute units 255A-N, and/or other factors.

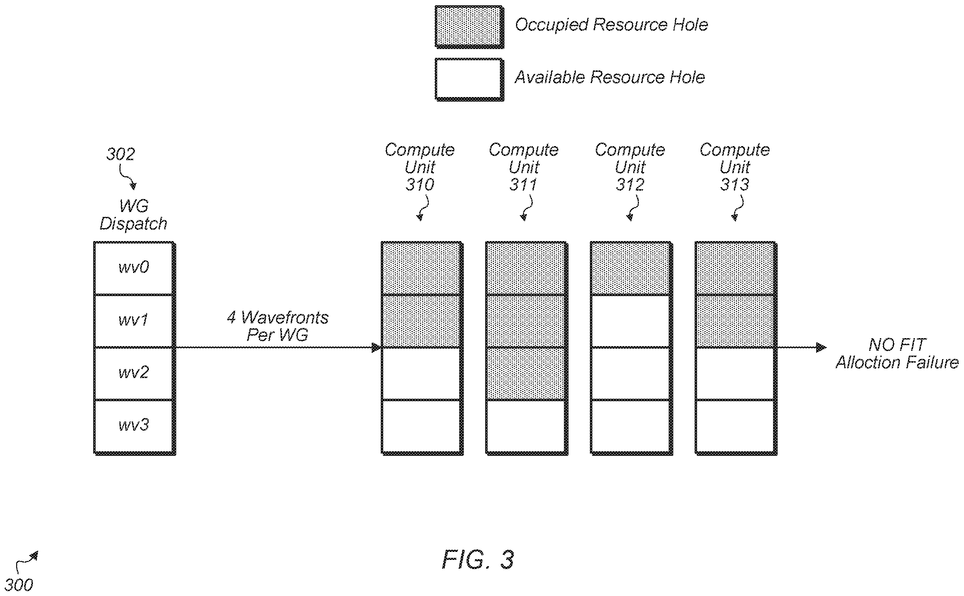

Referring now to FIG. 3, a block diagram of one implementation of a GPU 300 is shown. For GPU 300, a dispatch of workgroup (WG) 302 is being considered. It should be understood that the example of workgroup 302 having four wavefronts is shown merely for illustrative purposes. In other implementations, workgroups have other numbers of wavefronts besides four. Additionally, the example of GPU 300 having four compute units 310-313 is also intended merely as an illustration of one implementation. In other implementations, GPU 300 includes other numbers of compute units besides four.

The current allocation of compute units 310-313 is shown on the right-side of FIG. 3. Occupied resource holes are shown as shaded rectangles while available resource holes are shown as clear rectangles. As is seen from the current allocation of compute units 310-313, none of the individual compute units 310-313 has enough available resources to fit all four wavefronts of workgroup 302. Accordingly, for a traditional GPU 300, dispatch of workgroup 302 would be stalled.

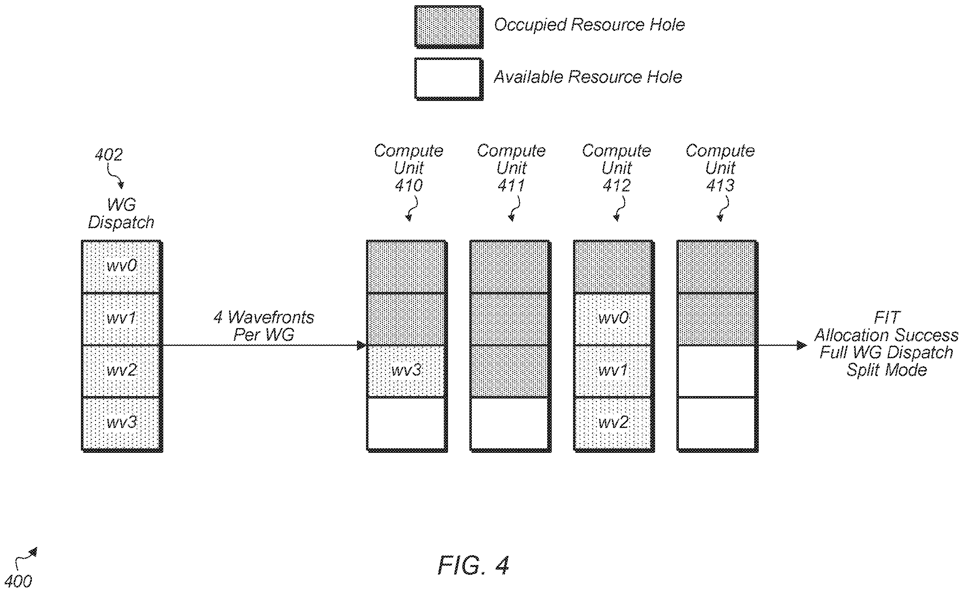

Turning now to FIG. 4, a block diagram of one implementation of a split dispatch of a workgroup 402 in GPU 400 is shown. GPU 400 is similar to GPU 300 shown in FIG. 3, with GPU 400 including four compute units 410-413 and workgroup 402 including four wavefronts. However, it should be understood that this example is merely indicative of one implementation. In other implementations, GPU 400 and/or workgroup 402 have other numbers of components.

However, in contrast to the example shown in FIG. 3, GPU 400 is able to divide workgroup 402 into different combinations of wavefront splits and allocate wavefronts to different compute units 410-413 to enable the immediate dispatch of workgroup 402. It should be understood that GPU 400 is able to divide workgroup 402 into different combinations of wavefront splits, with the actual wavefront split varying from implementation to implementation. In one implementation, wavefronts 0-2 of workgroup 402 are allocated to compute unit 412 and wavefront 3 of workgroup 402 is allocated to compute unit 410. By dividing the allocation of workgroup 402, this allows workgroup 402 to be allocated immediately rather than waiting until a compute unit has enough resources to allocate the entirety of workgroup 402. This results in higher wavefront level parallelism (WLP) and thread level parallelism (TLP) for applications executing on GPU 400.

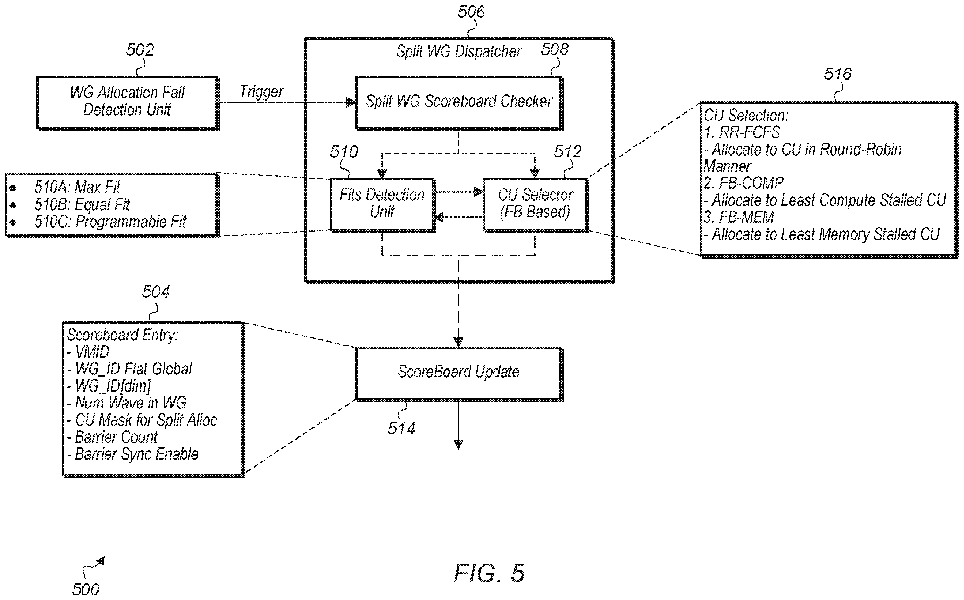

Referring now to FIG. 5, a block diagram of one implementation of workgroup dispatch control logic 500 is shown. In one implementation, the components of workgroup dispatch control logic 500 are included in control logic 240 of GPU 205 (of FIG. 2). Workgroup dispatch control logic 500 includes split workgroup dispatcher 506. Split workgroup dispatcher 506 includes scoreboard checker 508 which receives a trigger from workgroup allocation fail detection unit 502 if a workgroup is unable to fit inside a single compute unit. Scoreboard checker 508 queries fits detection unit 510 to determine if there are enough available resources in the compute units of the host GPU to fit the wavefronts of a given workgroup. In one implementation, fits detection unit 510 uses a maximum fit (Max Fit) 510A approach, an equal fit (Equal Fit) 510B approach, or a programmable fit 510C approach for fitting wavefronts to compute units. The maximum fit 510A approach attempts to fit wavefronts to the fewest number of compute units by allocating multiple wavefronts to the same compute unit. The equal fit 510B approach attempts to spread wavefronts equally across all of the compute units. The programmable fit 510C approach attempts to fit wavefronts to compute units according to a programmable policy. In other implementations, fits detection unit 510 uses other approaches for fitting wavefronts to compute units. If there are enough available resources within multiple compute units, then compute unit selector 512 determines how to allocate the given workgroup to the available compute units based on a feedback mechanism. This feedback mechanism uses the values of performance counters to track the resource utilization and resource contention on the available compute units of the GPU.

In one implementation, compute unit selector 512 includes a selection mechanism as shown in block 516. Compute unit (CU) selector 512 selects one of multiple selection algorithms to use in determining how to allocate the wavefronts of a given workgroup to the available compute units. For example, as shown in block 516, compute unit selector 512 selects from three separate algorithms to determine how to allocate wavefronts of the given workgroup to the available compute units. In other implementations, compute unit selector 512 selects from other numbers of algorithms besides three.

A first algorithm is a round-robin, first-come first serve (RR-FCFS) algorithm for choosing compute units to allocate the wavefronts of the given workgroup. A second algorithm is a least compute stalled compute unit algorithm (FB-COMP) which uses feedback from performance counters to determine which of the compute units are the least stalled out of all of the available compute units. Split workgroup dispatcher 506 then allocates wavefronts to the compute units identified as the least stalled. A third algorithm attempts to allocate wavefronts of the given workgroup to the least memory stalled compute units (FB-MEM). Split workgroup dispatcher 506 uses the performance counters to determine which compute units are the least memory stalled, and then split workgroup dispatcher 506 allocates wavefronts to these identified compute units. In other implementations, other types of algorithms are employed.

Depending on the implementation, the type of algorithm that is used is dynamically adjusted by software and/or hardware. In one implementation, an administrator selects the type of algorithm that is used. In another implementation, a user application selects the type of algorithm that is used. The user application has a fixed policy of which algorithm to select, or the user application dynamically adjusts the type of algorithm based on operation conditions. In a further implementation, the operating system (OS) or a driver selects the type of algorithm that is used for allocating wavefronts of workgroups to the available compute units. In other implementations, other techniques of selecting the split workgroup dispatch algorithm are possible and are contemplated.

After a given workgroup has been divided into individual wavefronts and allocated to multiple compute units, split workgroup dispatcher 506 allocates an entry in scoreboard 514 for the given workgroup. Split workgroup dispatcher 506 then uses the scoreboard entry to track the execution progress of these wavefronts on the different compute units. The scoreboard 514 has any number of entries depending on the implementation. For example, one example of a scoreboard entry is shown in box 504. For example, in one implementation, each scoreboard entry of scoreboard 514 includes a virtual machine identifier (VMID) field, a global workgroup ID field, a workgroup dimension field, a number of wavefronts in the workgroup field, a compute unit mask field to identify which compute units have been allocated wavefronts from the workgroup, a barrier count field to track the number of wavefronts that have reached a barrier, and a barrier synchronization enable field to indicate that at least one wavefront has reached a barrier. In other implementations, scoreboard entries includes other fields and/or is organized in other suitable manners.

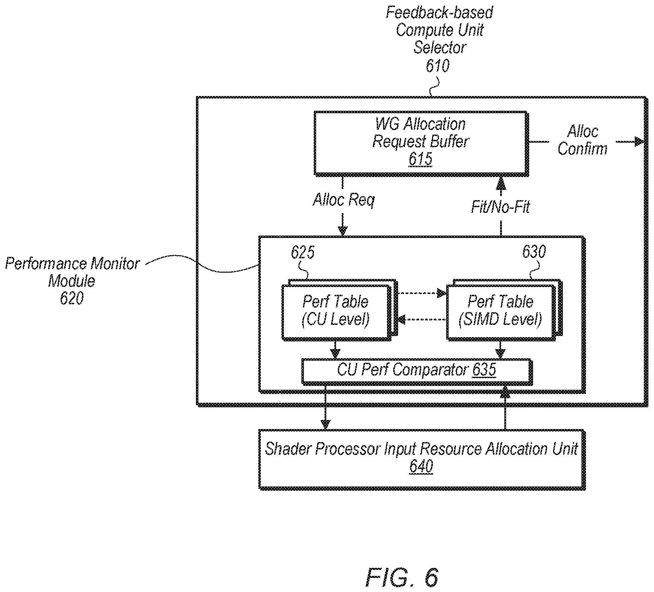

Turning now to FIG. 6, a block diagram of one implementation of a feedback-based compute unit (CU) selection mechanism 610 is shown. Feedback-based CU selector 610 includes workgroup (WG) allocation request buffer 615 and performance monitor module 620. In other implementations, feedback-based CU selector 610 includes other components and/or is structured in other suitable manners. WG allocation request buffer 615 stores received workgroups for allocation. WG allocation request buffer 615 conveys an allocation request to performance monitor module 620 which determines how to allocate the wavefronts of a given workgroup to the available compute units (CUs) of the GPU. Performance monitor module 620 conveys a fit or no-fit indication to WG allocation request buffer 615 based on the number of wavefronts of the given workgroup and the currently available CU resources. When WG allocation request buffer 615 receives a fit indication from performance monitor module 620, WG allocation request buffer 615 sends an allocation confirmation to the dispatch unit (not shown).

In one implementation, performance monitor module 620 collects values from various performance counters and implements CU level and SIMD level tables to track these values. In various implementations, the performance counters monitor resources such as vector arithmetic logic unit (VALU) execution bandwidth, scalar ALU (SALU) execution bandwidth, local data share (LDS) bandwidth, Load Store Bus bandwidth, Vector Register File (VRF) bandwidth, Scalar Register File (SRF) bandwidth, and the cache subsystem capacity and bandwidth including the L1, L2, and L3 caches and TLBs. CU performance (perf) comparator 635 includes logic for determining the load-rating of each CU for the given dispatch-ID (e.g., kernel-ID), and CU perf comparator 635 selects a preferred CU destination based on the calculated load-ratings. In one implementation, the load-rating is calculated as a percentage of the CU that is currently occupied or a percentage of a given resource that is currently being used or is currently allocated. In one implementation, the load-ratings of the different resources of the CU are added together to generate a load-rating for the CU. In one implementation, different weighting factors are applied to the various load-ratings of the different resources to generate a load-rating for the CU as a whole. Shader processor input resource allocation (SPI-RA) unit 640 allocates resources for a given workgroup on the preferred CU(s).

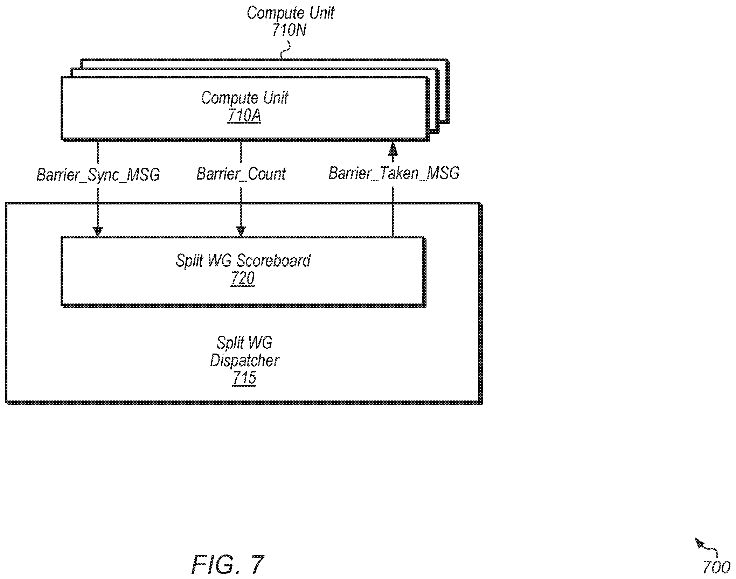

Referring now to FIG. 7, a block diagram of one implementation of a GPU 700 with a split workgroup (WG) scoreboard 720 connected to compute units 710A-N is shown. In one implementation, GPU 700 includes at least compute units 710A-N and split WG dispatcher 715. GPU 700 also includes any number of various other components which are not shown to avoid obscuring the figure. Compute units 710A-N are representative of any number and type of compute units. Each compute unit 710A-N includes a plurality of single-instruction, multiple-data (SIMD) units for executing work-items in parallel. In one implementation, each compute unit 710A-N includes four SIMD units. In other implementations, each compute unit 710A-N includes other numbers of SIMD units besides four.

When a given workgroup is divided for dispatch on multiple compute units 710A-N, split WG dispatcher 715 uses split WG scoreboard 720 to track the execution of the wavefronts of the given workgroup on compute units 710A-N. A compute unit 710 sends the barrier sync enable message to scoreboard 720 when any wavefront of a split WG reaches a barrier instruction. The barrier taken count field of the scoreboard entry is incremented for each wavefront that reaches this barrier. When all waves of a split WG have reached the barrier, scoreboard 720 informs each compute unit 710A-N identified in the split scoreboard compute unit mask to allow the waves to continue execution. In one implementation, scoreboard 720 informs each compute unit 710A-N by sending a barrier taken message.

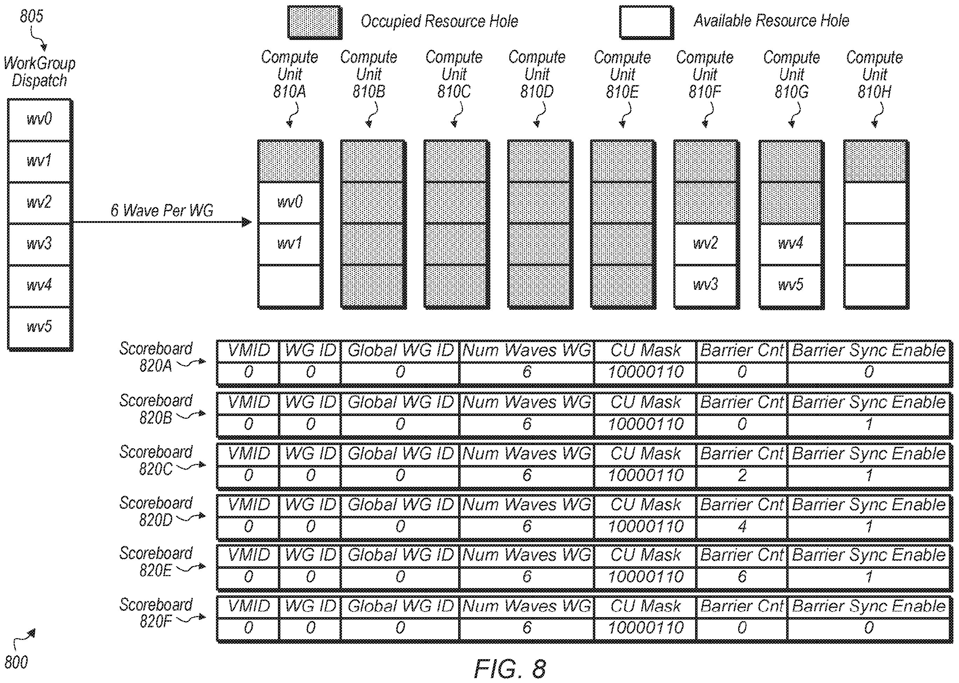

Turning now to FIG. 8, a block diagram of one implementation of scoreboard tracking of a split dispatch workgroup is shown. In one implementation, a workgroup 805 with six wavefronts is dispatched to multiple compute units of compute units 810A-H of GPU 800. It is noted that the example of workgroup 805 having six wavefronts is merely indicative of one implementation. In other implementations, workgroup 805 has other numbers of wavefronts. It is also noted that the example of GPU 800 having eight compute units 810A-H is merely indicative of one implementation. In other implementations, GPU 800 has other numbers of compute units.

As the six wavefronts of workgroup 805 are unable to fit on any single compute unit of compute units 810A-H, these six wavefronts are divided and allocated to multiple compute units. As shown in FIG. 8, wavefronts 0-1 are allocated to compute unit 810A, wavefronts 2-3 are allocated to compute unit 810F, and wavefronts 4-5 are allocated to compute unit 810G. In other implementations, the wavefronts of workgroup 805 are allocated in other suitable manners to compute units 810A-H such that all six wavefronts of workgroup are allocated to available resource holes of compute units 810A-H.

In one implementation, scoreboard 820 is used to track the execution of wavefronts of workgroup 805 on the compute units 810A-H. The scoreboards 820A-F shown on the bottom of FIG. 8 are meant to represent scoreboard 820 at six different points in time, with scoreboard 820A representing an earlier point in time and scoreboard 820F representing a later point in time and the other scoreboards 820B-E representing points in time in between. Scoreboard 820A represents the status of workgroup 805 immediately after allocation of the wavefronts to compute units 810A-H. The virtual machine identifier (VMID) field specifies the unique application context identifier as specified by the operating system. Multiple applications are able to execute on a GPU with distinct VMIDs. The workgroup (WG) ID and global WG ID fields identify the workgroup 805, while the number of waves field specifies the number of wavefronts in workgroup 805. The compute unit mask indicates which compute units 810A-H have been allocated wavefronts from workgroup 805. The barrier count field indicates how many wavefronts have reached a barrier when the barrier sync enable field is set. Scoreboard 820A indicates that a barrier has not yet been reached by any of the wavefronts of workgroup 805.

Scoreboard 820B indicates that a first wavefront has reached a barrier instruction. As a result of a wavefront reaching a barrier instruction, a corresponding SIMD unit of the compute unit sends a barrier sync enable indication to scoreboard 820B. In response to receiving the barrier sync enable indication, the barrier sync enable field of scoreboard 820B is set. Scoreboard 820C represents a point in time subsequent to the point in time represented by scoreboard 820B. It is assumed for the purposes of this discussion that wavefronts wv0 and wv1 have hit the barrier by this subsequent point in time. In response to wavefronts wv0 and wv1 hitting the barrier, SIMD units in compute unit 810A send barrier count update indications to scoreboard 820C. As a result of receiving the barrier count update indications, scoreboard 820C increments the barrier count to 2 for workgroup 805.

Scoreboard 820D represents a point in time subsequent to the point in time represented by scoreboard 820C. It is assumed for the purposes of this discussion that wavefronts wv4 and wv5 have hit the barrier by this subsequent point in time. In response to wavefronts wv4 and wv5 hitting the barrier, SIMD units in compute unit 810G send barrier count update indications to scoreboard 820D. Scoreboard 820D increments the barrier count to 4 for workgroup 805 after receiving the barrier count update indications from compute unit 810G.

Scoreboard 820E represents a point in time subsequent to the point in time represented by scoreboard 820D. It is assumed for the purposes of this discussion that wavefronts wv2 and wv3 have hit the barrier by this subsequent point in time. In response to wavefronts wv2 and wv3 hitting the barrier, SIMD units in compute unit 810F send barrier count update indications to scoreboard 820E. As a result of receiving the barrier count update indications, scoreboard 820E increments the barrier count to 6 for workgroup 805.

Scoreboard 820F represents a point in time subsequent to the point in time represented by scoreboard 820E. Since all of the waves have hit the barrier by this point in time, as indicated by the barrier count field equaling the number of wavefronts, control logic signals all of the compute units identified in the compute unit mask field that the barrier has been taken for all wavefronts of workgroup 805. Consequently, the SIMD units in these compute units are able to let the wavefronts proceed with execution. The barrier count field and barrier sync enable field are cleared after the barrier has been taken by all wavefronts of workgroup 805, as shown in the entry for scoreboard 820F.

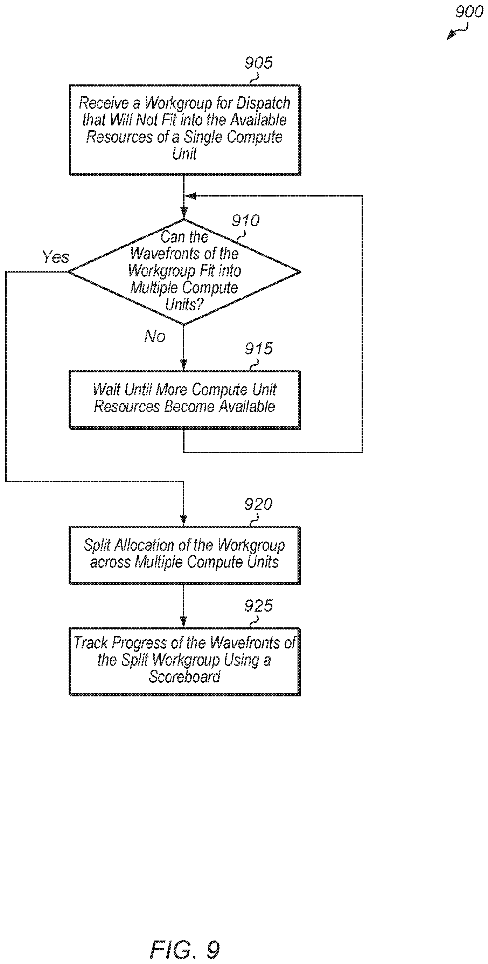

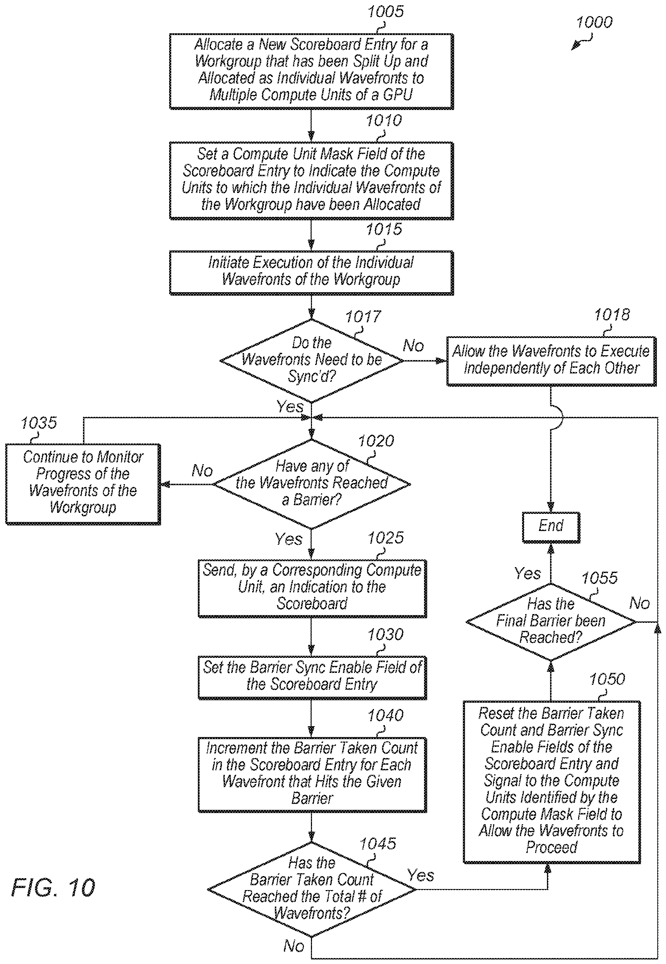

Referring now to FIG. 9, one implementation of a method 900 for performing a split workgroup dispatch is shown. For purposes of discussion, the steps in this implementation and those of FIG. 10-12 are shown in sequential order. However, it is noted that in various implementations of the described methods, one or more of the elements described are performed concurrently, in a different order than shown, or are omitted entirely. Other additional elements are also performed as desired. Any of the various systems or apparatuses described herein are configured to implement method 900.

A dispatch unit of a GPU receives a workgroup for dispatch that will not fit into the available resources of a single compute unit (block 905). Next, the dispatch unit determines if the individual wavefronts of the workgroup are able to fit into multiple compute units if the workgroup is divided (conditional block 910). If the workgroup are not able to fit in the available compute unit resources despite the workgroup being divided into individual wavefronts (conditional block 910, "no" leg), then the dispatch unit waits until more compute unit resources become available (block 915). After block 915, method 900 returns to conditional block 910. If the workgroup are able to fit in the available compute unit resources by being divided (conditional block 910, "yes" leg), then the dispatch unit splits allocation of the workgroup across multiple compute units (block 920).

After block 920, the GPU tracks progress of the wavefronts of the split workgroup using a scoreboard (block 925). One example of using a scoreboard to track progress of the wavefronts of a split workgroup is described in more detail below in the discussion regarding method 1000 (of FIG. 10). After block 925, method 900 ends.

Turning now to FIG. 10, one implementation of a method 1000 for using a scoreboard to track progress of the wavefronts of a split workgroup is shown. A dispatch unit allocates a new scoreboard entry for a workgroup that has been divided and allocated as individual wavefronts to multiple compute units of a GPU (block 1005). Also, control logic sets a compute unit mask field of the scoreboard entry to indicate the compute units to which the individual wavefronts of the workgroup have been allocated (block 1010). Then, execution of the individual wavefronts of the workgroup is initiated (block 1015). If the wavefronts of the workgroup need to be synchronized (conditional block 1017, "yes" leg), then the compute units monitor whether their wavefronts have reached a barrier (conditional block 1020). If the wavefronts of the workgroup do not need to be synchronized (conditional block 1017, "no" leg), then the control logic and compute units allow the wavefronts to execute independently of each other (block 1018). After block 1018, method 1000 ends.

If any of the wavefronts have reached a barrier (conditional block 1020, "yes" leg), then a corresponding compute unit sends an indication to the scoreboard (block 1025). In response to receiving the indication, the barrier sync enable field of the scoreboard entry is set (block 1030). If none of the wavefronts have reached a barrier (conditional block 1020, "no" leg), then the GPU continues to monitor the progress of the wavefronts (block 1035). After block 1035, method 1000 returns to conditional block 1020.

After block 1030, the control logic increments the barrier taken count in the scoreboard entry for each wavefront that hits the given barrier (block 1040). Next, the control logic determines if the barrier taken count has reached the total number of wavefronts in the workgroup (conditional block 1045). If the barrier taken count has reached the total number of wavefronts in the workgroup (conditional block 1045, "yes" leg), then the control logic resets the barrier taken count and barrier sync enable fields of the scoreboard entry and signals to the compute units identified by the compute mask field to allow the wavefronts to proceed (block 1050). If the barrier taken count has not reached the total number of wavefronts in the workgroup (conditional block 1045, "no" leg), then method 1000 returns to conditional block 1020. If the final barrier has been reached (conditional block 1055, "yes" leg), then method 1000 ends. Otherwise, if the final barrier has not been reached (conditional block 1055, "no" leg), then method 1000 returns to conditional block 1020.

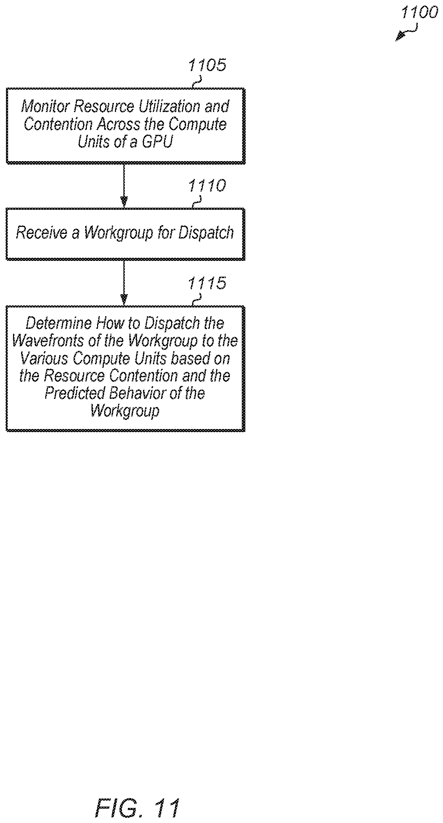

Referring now to FIG. 11, one implementation of a method 1100 for selecting compute units for allocating wavefronts of a split workgroup is shown. Control logic monitors resource utilization and contention across the compute units of a GPU (block 1105). The resources that are being monitored include at least vector arithmetic logic unit (VALU) execution bandwidth, scalar ALU (SALU) execution bandwidth, local data share (LDS) bandwidth, Load Store Bus bandwidth, Vector Register File (VRF) bandwidth, Scalar Register File (SRF) bandwidth, and the cache subsystem capacity and bandwidth including the L1, L2, and L3 caches and TLBs. In one implementation, the control logic uses performance counters to monitor the resource utilization and contention across the compute units of the GPU.

Next, a dispatch unit receives a workgroup for dispatch (block 1110). The dispatch unit determines how to dispatch the wavefronts of the workgroup to the various compute units based on the resource contention and the predicted behavior of the workgroup (block 1115). Depending on the implementation, the dispatch unit uses any of various policies for determining how to dispatch the wavefronts of the workgroup to the compute units of the GPU. Depending on the implementation, the dispatch unit decides to perform a conventional dispatch, single unit workgroup dispatch, or a split-workgroup dispatch. Additionally, policies which are used include (but are not limited to) a maximum-fit policy, equal-fit policy, and programmable-fit policy. The maximum-fit policy assigns waves to the minimum number of compute units. The equal-fit policy tries to spread the wavefronts of the split-workgroup equally among candidate compute units. The programmable-fit policy spreads wavefronts of the split-workgroup across compute units so as to minimize the load-rating across the compute units. After block 1115, method 1100 ends.

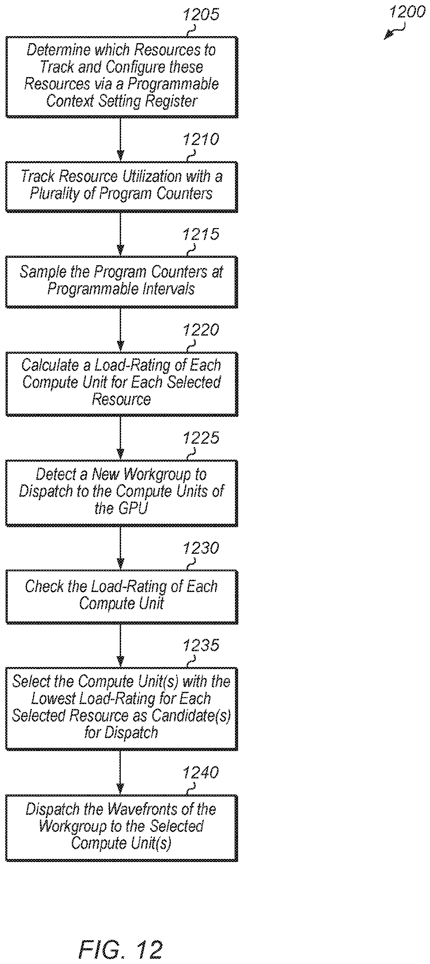

Turning now to FIG. 12, one implementation of a method for dispatching wavefronts of a workgroup so as to minimize resource contention among compute units is shown. Control logic of a GPU determines which resources to track and configures these resources via a programmable context setting register (block 1205). In one implementation, the programmable context setting register is updated by a kernel mode driver. Next, the control logic tracks resource utilization with a plurality of program counters (block 1210). Examples of resources being monitored by program counters include at least VALU execution bandwidth, SALU execution bandwidth, LDS bandwidth, Load Store Bus bandwidth, VRF bandwidth, SRF bandwidth, and the cache subsystem capacity and bandwidth including the L1, L2, and L3 caches and TLBs.

Then, the control logic samples the program counters at programmable intervals (block 1215). Next, the control logic calculates a load-rating of each compute unit for each selected resource (block 1220). In one implementation, the control logic calculates a load-rating of each compute unit for each selected resource per dispatch ID. In one implementation, a dispatch ID is a monotonically increasing number which identifies the kernel dispatched for execution by the command processor. In one implementation, each application context or VMID has its own monotonically increasing dispatch ID counter. Then, a dispatch unit detects a new workgroup to dispatch to the compute units of the GPU (block 1225). The dispatch unit checks the load-rating of each compute unit (block 1230). Next, the dispatch unit selects the compute unit(s) with the lowest load-rating for each selected resource as candidate(s) for dispatch (block 1235). Then, the dispatch unit dispatches the wavefronts of the workgroup to the selected compute unit(s) (block 1240). After block 1240, method 1200 ends.

In various implementations, program instructions of a software application are used to implement the methods and/or mechanisms described herein. For example, program instructions executable by a general or special purpose processor are contemplated. In various implementations, such program instructions are represented by a high level programming language. In other implementations, the program instructions are compiled from a high level programming language to a binary, intermediate, or other form. Alternatively, program instructions are written that describe the behavior or design of hardware. Such program instructions are represented by a high-level programming language, such as C. Alternatively, a hardware design language (HDL) such as Verilog is used. In various implementations, the program instructions are stored on any of a variety of non-transitory computer readable storage mediums. The storage medium is accessible by a computing system during use to provide the program instructions to the computing system for program execution. Generally speaking, such a computing system includes at least one or more memories and one or more processors configured to execute program instructions.

## Claims

1. A processor (205) comprising:
a plurality of compute units (255) comprising circuitry configured to execute instructions; and
a dispatch unit (250) comprising circuitry configured to dispatch workgroups to the plurality of compute units (255);
wherein the processor (205) is configured to:
divide a workgroup (402) into individual wavefronts for dispatch from the dispatch unit, responsive to determining that the workgroup (402) does not fit within a single compute unit based on currently available resources of the plurality of compute units (255);
monitor a plurality of performance counters to track resource contention among the plurality of compute units (1210);
calculate a load-rating of each compute unit for each selected resource based on the plurality of performance counters (1220);
select compute units with the lowest load-rating for each selected resource as candidates for dispatch (1235); and
dispatch the wavefronts of the workgroup to the selected compute units (1240).

2. The processor (205) as recited in claim 1, wherein dividing the workgroup (402) into individual wavefronts for dispatch from the dispatch unit (250) to separate compute units comprises:
dispatching a first wavefront of the workgroup (402) to a first compute unit; and
dispatching a second wavefront of the first workgroup (402) to a second compute unit, wherein:
the second wavefront is different from the first wavefront;
the second compute unit is different from the first compute unit.

3. The processor (205) as recited in claim 1, wherein the processor (205) further comprises a scoreboard (245), and wherein the processor (205) is further configured to:
allocate an entry in the scoreboard (245) to track wavefronts of the workgroup (402);
track, in the entry, a number of wavefronts of the workgroup (402) which have reached a given barrier; and
send a signal to two or more compute units to allow wavefronts of the workgroup (402) to proceed when the number of wavefronts of the workgroup (402) which have reached the given barrier is equal to a total number of wavefronts in the workgroup (402).

4. The processor (205) as recited in claim 3, wherein the two or more compute units are identified by a compute unit mask field in the entry.

5. The processor (205) as recited in claim 1, wherein the plurality of performance counters track two or more of vector arithmetic logic unit (VALU) execution bandwidth, scalar ALU (SALU) execution bandwidth, local data share (LDS) bandwidth, Load Store Bus bandwidth, Vector Register File (VRF) bandwidth, Scalar Register File (SRF) bandwidth, cache subsystem capacity, cache bandwidth, and translation lookaside buffer (TLB) bandwidth.

6. A method comprising:
dispatching workgroups to a plurality of compute units (255);
dividing a workgroup (402) into individual wavefronts for dispatch, responsive to determining that the workgroup does not fit within a single compute unit based on currently available resources of the plurality of compute units (1210);
monitoring a plurality of performance counters to track resource contention among the plurality of compute units (1210);
calculating a load-rating of each compute unit for each selected resource based on the plurality of performance counters (1220);
selecting compute units with the lowest load-rating for each selected resource as candidates for dispatch (1235); and
dispatching the wavefronts of the workgroup to the selected compute units (1240).

7. The method as recited in claim 6, wherein dividing the workgroup (402) into individual wavefronts for dispatch to separate compute units comprises:
dispatching a first wavefront of the workgroup (402) to a first compute unit; and
dispatching a second wavefront of the workgroup (402) to a second compute unit, wherein:
the second wavefront is different from the first wavefront;
the second compute unit is different from the first compute unit.

8. The method as recited in claim 6, further comprising:
allocating an entry in a scoreboard (245) to track wavefronts of the workgroup (402);
tracking, in the entry, a number of wavefronts of the workgroup (402) which have reached a given barrier; and
sending a signal to two or more compute units to allow wavefronts of the workgroup (402) to proceed when the number of wavefronts of the workgroup (402) which have reached the given barrier is equal to a total number of wavefronts in the workgroup (402).

9. The method as recited in claim 8, wherein the two or more compute units are identified by a compute unit mask field in the entry.

10. The method as recited in claim 6, wherein the plurality of performance counters track two or more of vector arithmetic logic unit (VALU) execution bandwidth, scalar ALU (SALU) execution bandwidth, local data share (LDS) bandwidth, Load Store Bus bandwidth, Vector Register File (VRF) bandwidth, Scalar Register File (SRF) bandwidth, cache subsystem capacity, cache bandwidth, and translation lookaside buffer (TLB) bandwidth.

11. A system comprising:
a memory; and
a processor (205), as recited in any of claims 1 to 5, coupled to the memory.

## Patentansprüche

1. Prozessor (205), umfassend:
eine Vielzahl von Recheneinheiten (255), umfassend eine Schaltlogik, die konfiguriert ist, um Anweisungen auszuführen; und
eine Versandeinheit (250), umfassend eine Schaltlogik, die konfiguriert ist, um Arbeitsgruppen an die Vielzahl von Recheneinheiten (255) zu befördern;
wobei der Prozessor (205) konfiguriert ist zum:
Teilen einer Arbeitsgruppe (402) in einzelne Wellenfronten für die Beförderung von der Beförderungseinheit als Reaktion auf ein Bestimmen, dass die Arbeitsgruppe (402) nicht innerhalb eine einzige Recheneinheit passt, basierend auf derzeit verfügbaren Ressourcen der Vielzahl von Recheneinheiten (255);
Überwachen einer Vielzahl von Leistungszählern, um Ressourcenkonflikte unter der Vielzahl von Recheneinheiten (1210) zu verfolgen;
Berechnen einer Lastbewertung jeder Recheneinheit für jede ausgewählte Ressource basierend auf der Vielzahl von Leistungszählern (1220);
Auswählen von Recheneinheiten mit der niedrigsten Lastbewertung für jede ausgewählte Ressource als Kandidaten für die Beförderung (1235); und
Befördern der Wellenfronten der Arbeitsgruppe an die ausgewählten Recheneinheiten (1240).

2. Prozessor (205) nach Anspruch 1, wobei das Teilen der Arbeitsgruppe (402) in einzelne Wellenfronten für die Beförderung von der Beförderungseinheit (250) an separate Recheneinheiten umfasst:
Befördern einer ersten Wellenfront der Arbeitsgruppe (402) an eine erste Recheneinheit; und
Befördern einer zweiten Wellenfront der ersten Arbeitsgruppe (402) an eine zweiten Recheneinheit, wobei:
sich die zweite Wellenfront von der ersten Wellenfront unterscheidet;
sich die zweite Recheneinheit von der ersten Recheneinheit unterscheidet.

3. Prozessor (205) nach Anspruch 1, wobei der Prozessor (205) ferner eine Anzeigetafel (245) umfasst, und wobei der Prozessor (205) ferner konfiguriert ist zum:
Zuweisen eines Eintrags in der Anzeigetafel (245), um Wellenfronten der Arbeitsgruppe (402) zu verfolgen;
Verfolgen, in dem Eintrag, einer Anzahl von Wellenfronten der Arbeitsgruppe (402), die eine gegebene Barriere erreicht haben; und
Senden eines Signals an zwei oder mehr Recheneinheiten, um Wellenfronten der Arbeitsgruppe (402) zu ermöglichen, fortzufahren, wenn die Anzahl von Wellenfronten der Arbeitsgruppe (402), die die gegebene Barriere erreicht haben, gleich einer Gesamtzahl von Wellenfronten in der Arbeitsgruppe (402) ist.

4. Prozessor (205) nach Anspruch 3, wobei die zwei oder mehr Recheneinheiten durch ein Recheneinheitsmaskenfeld in dem Eintrag identifiziert werden.

5. Prozessor (205) nach Anspruch 1, wobei die Vielzahl von Leistungszählern zwei oder mehr von Vektorarithmetiklogikeinheitsausführungsbandbreite (VALU-Ausführungsbandbreite), skalarer ALU-Ausführungsbandbreite (SALU-Ausführungsbandbreite), lokaler Datenfreigabenbandbreite (LDS-Bandbreite), Lastspeicherbusbandbreite, Vektorregisterdateibandbreite (VRF-Bandbreite), skalarer Registerdateibandbreite (SRF-Bandbreite), Cache-Teilsystemkapazität, Cache-Bandbreite und Translation-Lookaside-Puffer-Bandbreite (TLB-Bandbreite) verfolgt.

6. Verfahren, umfassend:
Befördern von Arbeitsgruppen an eine Vielzahl von Recheneinheiten (255);
Teilen einer Arbeitsgruppe (402) in einzelne Wellenfronten für die Beförderung, als Reaktion auf das Bestimmen, dass die Arbeitsgruppe nicht innerhalb eine einzige Recheneinheit passt, basierend auf derzeit verfügbaren Ressourcen der Vielzahl von Recheneinheiten (1210);
Überwachen einer Vielzahl von Leistungszählern, um Ressourcenkonflikte unter der Vielzahl von Recheneinheiten (1210) zu verfolgen;
Berechnen einer Lastbewertung jeder Recheneinheit für jede ausgewählte Ressource basierend auf der Vielzahl von Leistungszählern (1220);
Auswählen von Recheneinheiten mit der niedrigsten Lastbewertung für jede ausgewählte Ressource als Kandidaten für die Beförderung (1235); und
Befördern der Wellenfronten der Arbeitsgruppe an die ausgewählten Recheneinheiten (1240).

7. Verfahren nach Anspruch 6, wobei das Teilen der Arbeitsgruppe (402) in einzelne Wellenfronten für die Beförderung an separate Recheneinheiten umfasst:
Befördern einer ersten Wellenfront der Arbeitsgruppe (402) an eine erste Recheneinheit; und
Befördern einer zweiten Wellenfront der Arbeitsgruppe (402) an eine zweite Recheneinheit, wobei:
sich die zweite Wellenfront von der ersten Wellenfront unterscheidet;
sich die zweite Recheneinheit von der ersten Recheneinheit unterscheidet.

8. Verfahren nach Anspruch 6, ferner umfassend:
Zuweisen eines Eintrags in einer Anzeigetafel (245), um Wellenfronten der Arbeitsgruppe (402) zu verfolgen;
Verfolgen, in dem Eintrag, einer Anzahl von Wellenfronten der Arbeitsgruppe (402), die eine gegebene Barriere erreicht haben; und
Senden eines Signals an zwei oder mehr Recheneinheiten, um Wellenfronten der Arbeitsgruppe (402) zu ermöglichen, fortzufahren, wenn die Anzahl von Wellenfronten der Arbeitsgruppe (402), die die gegebene Barriere erreicht haben, gleich einer Gesamtzahl von Wellenfronten in der Arbeitsgruppe (402) ist.

9. Verfahren nach Anspruch 8, wobei die zwei oder mehr Recheneinheiten durch ein Recheneinheitsmaskenfeld in dem Eintrag identifiziert werden.

10. Verfahren nach Anspruch 6, wobei die Vielzahl von Leistungszählern zwei oder mehr von Vektorarithmetiklogikeinheitsausführungsbandbreite (VALU-Ausführungsbandbreite), skalarer ALU-Ausführungsbandbreite (SALU-Ausführungsbandbreite), lokaler Datenfreigabenbandbreite (LDS-Bandbreite), Lastspeicherbusbandbreite, Vektorregisterdateibandbreite (VRF-Bandbreite), skalarer Registerdateibandbreite (SRF-Bandbreite), Cache-Teilsystemkapazität, Cache-Bandbreite und Translation-Lookaside-Puffer-Bandbreite (TLB-Bandbreite) verfolgt.

11. System, umfassend:
einen Speicher; und
einen Prozessor (205) nach einem der Ansprüche 1 bis 5, der mit dem Speicher gekoppelt ist.

## Revendications

1. Processeur (205) comprenant :
une pluralité d'unités de calcul (255) comprenant un système de circuit configuré pour exécuter des instructions ; et
une unité de répartition (250) comprenant un système de circuit configuré pour répartir des groupes de travail sur la pluralité d'unités de calcul (255) ;
le processeur (205) étant configuré pour :
diviser un groupe de travail (402) en fronts d'onde individuels pour répartition à partir de l'unité de répartition, en réponse à la détermination que le groupe de travail (402) ne rentre pas dans une seule unité de calcul en fonction de ressources actuellement disponibles de la pluralité d'unités de calcul (255) ;
surveiller une pluralité de compteurs de performance pour suivre une contention de ressource parmi la pluralité d'unités de calcul (1210) ;
calculer une valeur nominale de charge de chaque unité de calcul pour chaque ressource sélectionnée en fonction de la pluralité de compteurs de performance (1220) ;
sélectionner des unités de calcul avec la valeur nominale de charge la plus basse pour chaque ressource sélectionnée en tant que candidats pour répartition (1235) ; et
répartir les fronts d'onde du groupe de travail sur les unités de calcul sélectionnées (1240).

2. Processeur (205) selon la revendication 1, dans lequel la division du groupe de travail (402) en fronts d'onde individuels pour répartition à partir de l'unité de répartition (250) sur des unités de calcul séparées comprend :
la répartition d'un premier front d'onde du groupe de travail (402) sur une première unité de calcul ; et
la répartition d'un second front d'onde du premier groupe de travail (402) sur une seconde unité de calcul, dans lequel :
le second front d'onde est différent du premier front d'onde ;
la seconde unité de calcul est différente de la première unité de calcul.

3. Processeur (205) selon la revendication 1, le processeur (205) comprenant en outre un tableau d'évaluation (245), et le processeur (205) étant configuré en outre pour :
allouer une entrée dans le tableau d'évaluation (245) pour suivre des fronts d'onde du groupe de travail (402) ;
suivre, dans l'entrée, un nombre de fronts d'onde du groupe de travail (402) qui ont atteint une barrière donnée ; et
envoyer un signal à deux unités de calcul ou plus pour permettre à des fronts d'onde du groupe de travail (402) de continuer lorsque le nombre de fronts d'onde du groupe de travail (402) qui ont atteint la barrière donnée est égal à un nombre total de fronts d'onde dans le groupe de travail (402).

4. Processeur (205) selon la revendication 3, dans lequel les deux unités de calcul ou plus sont identifiées par un champ de masque d'unité de calcul dans l'entrée.

5. Processeur (205) selon la revendication 1, dans lequel la pluralité de compteurs de performance suivent deux ou plus parmi largeur de bande d'exécution d'unité logique arithmétique vectorielle (VALU), largeur de bande d'exécution d'ALU scalaire (SALU), largeur de bande de partage local de données (LDS), largeur de bande de bus de chargement-stockage, largeur de bande de fichier de registre vectoriel (VRF), largeur de bande de fichier de registre scalaire (SRF), capacité de sous-système de cache, largeur de bande de cache et largeur de bande de tampon de traduction en parallèle (TLB).

6. Procédé, comprenant :
la répartition de groupes de travail sur une pluralité d'unités de calcul (255) ;
la division d'un groupe de travail (402) en fronts d'onde individuels pour répartition, en réponse à la détermination que le groupe de travail ne rentre pas dans une seule unité de calcul en fonction de ressources actuellement disponibles de la pluralité d'unités de calcul (1210) ;
la surveillance d'une pluralité de compteurs de performance pour suivre une contention de ressource parmi la pluralité d'unités de calcul (1210) ;
le calcul d'une valeur nominale de charge de chaque unité de calcul pour chaque ressource sélectionnée en fonction de la pluralité de compteurs de performance (1220) ;
la sélection d'unités de calcul avec la valeur nominale de charge la plus basse pour chaque ressource sélectionnée en tant que candidats pour répartition (1235) ; et
la répartition des fronts d'onde du groupe de travail sur les unités de calcul sélectionnées (1240).

7. Procédé selon la revendication 6, dans lequel la division du groupe de travail (402) en fronts d'onde individuels pour répartition sur des unités de calcul séparées comprend :
la répartition d'un premier front d'onde du groupe de travail (402) sur une première unité de calcul ; et
la répartition d'un second front d'onde du groupe de travail (402) sur une seconde unité de calcul, dans lequel :
le second front d'onde est différent du premier front d'onde ;
la seconde unité de calcul est différente de la première unité de calcul.

8. Procédé selon la revendication 6, comprenant en outre :
l'allocation d'une entrée dans un tableau d'évaluation (245) pour suivre des fronts d'onde du groupe de travail (402) ;
le suivi, dans l'entrée, d'un nombre de fronts d'onde du groupe de travail (402) qui ont atteint une barrière donnée ; et
l'envoi d'un signal à deux unités de calcul ou plus pour permettre à des fronts d'onde du groupe de travail (402) de continuer lorsque le nombre de fronts d'onde du groupe de travail (402) qui ont atteint la barrière donnée est égal à un nombre total de fronts d'onde dans le groupe de travail (402).

9. Procédé selon la revendication 8, dans lequel les deux unités de calcul ou plus sont identifiées par un champ de masque d'unité de calcul dans l'entrée.

10. Procédé selon la revendication 6, dans lequel la pluralité de compteurs de performance suivent deux ou plus parmi largeur de bande d'exécution d'unité logique arithmétique vectorielle (VALU), largeur de bande d'exécution d'ALU scalaire (SALU), largeur de bande de partage local de données (LDS), largeur de bande de bus de chargement-stockage, largeur de bande de fichier de registre vectoriel (VRF), largeur de bande de fichier de registre scalaire (SRF), capacité de sous-système de cache, largeur de bande de cache et largeur de bande de tampon de traduction en parallèle (TLB).

11. Système comprenant :
une mémoire ; et
un processeur (205), selon l'une quelconque des revendications 1 à 5, accouplé à la mémoire.
